# EUROPEAN PATENT APPLICATION

(11) **EP 4 383 386 A1**
(43) Date of publication of application: **12.06.2024**
(21) Application number: 22212540.3
(22) Date of filing: 09.12.2022
(51) Int. Cl.: H01M 10/04, H01M 10/0587, H01M 10/613, H01M 10/65, H01M 50/545

(54) **BATTERY CELL WITH IMPROVED HEAT TRANSFER**

(71) Applicant: VOLVO TRUCK CORPORATION, 405 08 Göteborg (SE)
(72) Inventor: AHMED, Istaq, 422 44 Göteborg (SE); HAMRIN, Alice, 417 06 Göteborg (SE); TINTIGNAC, Sophie, 418 71 Göteborg (SE); MCCARTHY, Benjamin, 439 55 Åsa (SE); CHOI, Youngjin, 421 73 Västra Frölunda (SE); SHAWN, Soran, 431 33 Mölndal (SE)
(74) Representative: Ström & Gulliksson AB

(57) **Abstract**

A battery cell (1) comprising a cell casing (2), and an electrode assembly (3) comprising a negative electrode (4) and a positive electrode (5), and at least two insulating layers (6, 6') in a sandwich configuration, wherein said negative electrode (4) comprises a current collector (7) and a negative electrode material (8) coating arranged thereon, and has an outer vertical edge (12) extending along a vertical axis (A), and which is facing said cell casing (2), wherein said outer vertical edge (12) is attached to said cell casing (2) by at least 80 % of the length of the vertical edge.

## Description

### TECHNICAL FIELD

The disclosure relates generally to a battery cell. In particular aspects, the disclosure relates to a cylindrical or prismatic battery cell with improved heat transfer. The disclosure can be applied in any application using a battery cell, but in particular in vehicles, such as electrical vehicles and heavy-duty vehicles, such as trucks, buses, and construction equipment.

### BACKGROUND

Generally during use of cylindrical and prismatic battery cells, in particular jelly-roll or Swiss roll battery cells, heat is generated during the charge and discharge operations inside the electrode assembly of the cell. Prismatic cells may also have a stacked electrode assembly configuration. The battery cells are usually cooled down by applying cooling to the cell casing. Since the heat is generated within the cell, this cooling takes a long time as heat transfer in a radial direction is much slower compared to heat transfer in a plane direction. The heat generated in the electrode assembly must be removed since otherwise the battery cell may become overheated, age too quickly or create safety hazards or loose efficiency too quickly. There is thus a need for a new and improved cell design for a cylindrical and prismatic battery cell.

### SUMMARY

According to a first aspect of the disclosure, there is provided a battery cell comprising a cell casing, and an electrode assembly comprising a negative electrode and a positive electrode, and at least two insulating layers in a sandwich configuration, wherein said negative electrode comprises a current collector and a negative electrode material coating arranged thereon, and has an outer vertical edge extending along a vertical axis, and which is facing said cell casing, wherein said outer vertical edge is attached to said cell casing by at least 80 % of the length of the vertical edge.

The first aspect of the disclosure may seek to provide for a reduced cell aging with time and usage. A technical benefit may include improved and more efficient cooling of the inside of the cell by means of heat conduction. By attaching the edge of the negative electrode to the cell casing, an increased surface area for heat transfer between the cell casing and the inside of the electrode assembly is achieved, through the direct cooling of the negative electrode. This means that the cooling of the body or can of the battery cell will be more efficiently transferred to the inside of the battery cell, and this may reduce ageing effects, improve the function and life-time of the battery cell.

In some examples, the vertical edge of said current collector may be attached to said cell casing. A technical benefit may include a more efficient heat transfer through the current collector, which often is a copper foil.

In some examples, said vertical edge of said current collector may have a reinforced portion arranged along the length of the vertical edge. By reinforced portion is meant that the current collector is thicker at the edge portion. A technical benefit of the reinforced edge may include ensuring that the attachment to the cell casing is stable and does not break.

In some examples, said outer vertical edge may be attached to said cell casing by at least 90 %, or at least 95 %, or at least 99 % of the length of the vertical edge. A technical benefit of attaching substantially the complete edge of the edge to the cell casing is that the heat efficient transfer and cooling is ensured.

In some examples, the battery cell according to the first aspect further may comprise a soldered portion arranged between said vertical edge and said cell casing. The soldered portion ensures the connection between the cell casing and the electrode.

In some examples, the soldered portion may comprise a material having a thermal conductivity in the range of 50 to 400 W/m·K. Conventional soldering materials, such as tin has a thermal conductivity around 50 W/m K. The soldering portion or the soldering material used in the present disclosure is preferably formed by a material with a thermal conductivity in the higher range, and the technical benefit may include an increase in the heat transfer and cooling.

In some examples, the battery cell may be any one of a cylindrical battery cell and a prismatic battery cell.

According to a second aspect of the disclosure, there is provided a vehicle comprising the battery cell according to the first aspect. The second aspect of the disclosure may seek to provide a vehicle comprising a battery pack with an improved life-time, which is beneficial from both an environmental and sustainability aspect. Although the disclosure may be described with respect to a particular vehicle, the disclosure is not restricted to any particular vehicle.

According to a third aspect of the disclosure, there is provided a method for manufacturing a battery cell according to the first aspect, comprising: providing a cell casing; providing an electrode assembly comprising a negative electrode, a positive electrode, and at least two insulating layers in a sandwich configuration, and wherein said negative electrode comprises a current collector and a negative electrode material coated thereon; placing said electrode assembly into said cell casing and attaching an outer vertical edge of said negative electrode to said cell casing, wherein said outer vertical edge is attached to cell casing by at least 80 % of the length of the vertical edge. The third aspect of the disclosure may seek to provide for a reduced cell aging with time and usage.

In some examples, the method may further comprise arranging said electrode assembly to form a rolled-up sandwich configuration before placing said rolled-up sandwich configuration into said cell casing.

In some alternative examples, the method may further comprise arranging said electrode assembly to form a stacked configuration, before placing said stacked configuration into said cell casing.

In some examples, said vertical edge may be attached to the cell casing by at least 90 %, or at least 95 % or at least 99 % of the length of the vertical edge. A technical benefit of attaching substantially the complete edge of the edge to the cell casing is that the heat efficient transfer and cooling is ensured.

In some examples, a vertical edge of said current collector may be attached to said cell casing.

In some examples, said vertical edge of said current collector may have a reinforced portion arranged along the length of the vertical edge.

In some examples, said vertical edge may be attached to said cell casing by soldering, such that a soldered portion is formed between said vertical edge and said cell casing. The technical benefit of the soldered portion may include ensuring that the connection between the cell casing and the electrode is stable.

In some examples, the soldered portion may comprise a material having a thermal conductivity in the range of 50 to 400 W/m·K. Conventional soldering materials, such as tin has a thermal conductivity around 50 W/m K. The soldering portion or the soldering material used in the present disclosure is preferably formed by a material with a thermal conductivity in the higher range, and the technical benefit may include an increase in the heat transfer and cooling.

The above aspects, accompanying claims, and/or examples disclosed herein above and later below may be suitably combined with each other as would be apparent to anyone of ordinary skill in the art.
Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
**FIG. 1** is an exemplary cylindrical battery cell.
**FIGS 2A and 2B** are exemplary battery cells according to the present disclosure.

### DETAILED DESCRIPTION

Aspects set forth below represent the necessary information to enable those skilled in the art to practice the disclosure.

Battery cells, especially in a cylindrical format, i.e. jelly-roll or Swiss roll cylindrical cell, are cooled down by applying cooling condition to a cell casing. However, the heat is generating during charge and discharge inside the jelly-roll of the cell. When cooling is applied from outer casing it takes longer time to cool down the cell jelly-roll as heat transfer in the radial direction is much slower compared to heat transfer in plane direction. Usually, cell negative pole connected at the bottom of the cylindrical casing and positive terminal at the top using soldering of small part of the current collector. This creates a slow cooling via conduction heat transfer due to the small surface area connected to cell outer casing. Cylindrical cells are often small and round, making it possible to stack them in devices of all sizes.

Prismatic battery cells, i.e. rectangular shaped that allows for an efficient stacking of multiple cells in a battery module, may also have a jelly-roll (winding) electrode assembly configuration, or alternatively a stacked or flattened electrode assembly configuration. In the stacked configuration the anode, and cathode are arranged in layers, with interposed separator layers. The cooling principle for prismatic battery cells is substantially the same as with cylindrical battery cell, regardless if the electrode assembly is in a jelly roll or stacked configuration. Prismatic battery cells are often utilized in energy-intensive applications such as energy storage systems or in electric vehicles, due to their larger size compared to cylindrical battery cells.

An improvement can be made by increasing the surface area of the contact of the jelly-roll or the stacked assembly with the casing of the cell. This increased surface area increase the heat transfer between the cell body and inside the electrode assembly (jelly roll or stacked) via conduction mechanism, thereby improving cooling of the cell efficiently which minimise the cell aging with time and usage. The cell casing may be cooled from the outside, by for instance a liquid coolant or through other means for cooling.

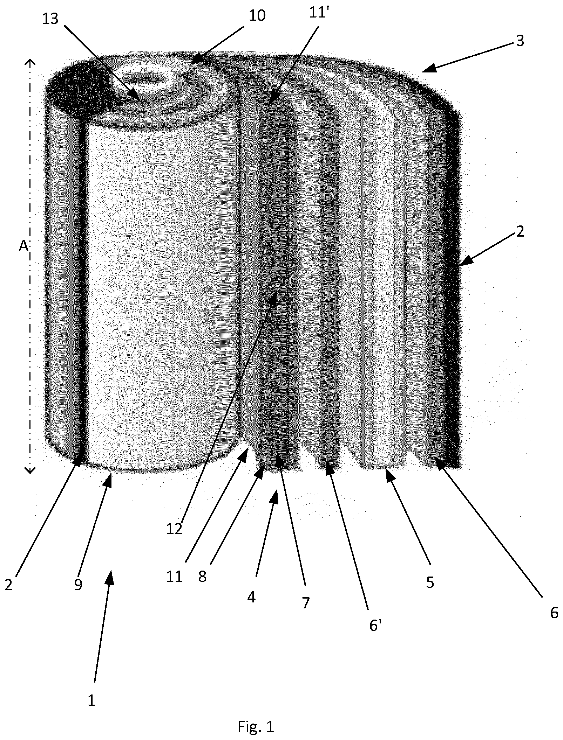

**FIG. 1** is an exemplary cylindrical battery cell 1 according to one example. The cylindrical battery cell comprises a casing 2, having a top portion 10 and a bottom portion 9, and rolled-up electrode assembly 3.

The electrode assembly 3 comprises a negative electrode 4 and a positive electrode 5, and insulating layers 6, 6' arranged in a sandwich configuration. The electrode assembly 3 is rolled-up into a so called jelly-roll or Swiss roll assembly. The rolled-up assembly or configuration 3' is placed in the cell casing 2 to form a cylindrical battery cell 1. This type of configuration can also be seen in a prismatic cell (not shown).

In an electrolytic cell The negative electrode 4 (i.e. the anode) conventionally comprises a conductive substrate or a current collector, such as a metal foil 7, which is coated with a negative electrode or anode material 8. The negative electrode is conventionally formed from a compound of carbon materials coating on a copper foil 7. Graphite is the most conventional material to use as carbon materials for the anode, however lithium titanate (LTO) in combination with an aluminum current collector may also be used. The positive electrode (i.e. cathode) is conventionally designed in the same manner, with a metal foil, often aluminum, coated on either or both sides with a positive electrode or cathode material, such as for instance Lithium Cobalt Oxide (LiCoO2), Lithium Manganese Oxide (LiMnO2). An electrolyte serves as an ion transfer media to make a battery conductive by promoting the movement of ions from the cathode to the anode on charge and in reverse on discharge. Ions are electrically charged atoms that have lost or gained electrons. The electrolyte of a battery conventionally consists of soluble salts, acids or other bases in liquid, gelled and dry formats. In a Li-ion battery the electrolyte may be in liquid, gel or dry polymer form. Further, a passivation film forms on the anode that is called solid electrolyte interface (SEI). This layer separates the anode from the cathode but allows ions to pass through much like a separator.

As shown in Fig. 1 the negative electrode or anode 4 has two opposing longitudinal edges 11, 11' and two opposing vertical edges 12. Only the outer vertical edge 12 is showing in Fig. 1 as the opposing vertical edge is arranged at the center portion 13 of the rolled-up electrode assembly 3. The vertical edge 12 extends along a vertical axis A, i.e. along the length of the cylindrical battery cell. When the electrode assembly 3 is placed in the cell casing 2 the longitudinal edges 11, 11' are arranged such that it is facing the top portion 10 and bottom portion 9 of the cell casing 2 respectively.

The outer vertical edge 12 is attached to the cell casing 2, by at least 80 % of the length of the vertical edge.

The outer vertical edge 12 may according to one alternative be attached to the cell casing 2, by at least 90 % of the vertical edge.

The outer vertical edge 12 may according to one alternative be attached to the cell casing 2, by at least 95 % of the vertical edge.

The outer vertical edge 12 may according to an alternative be attached to the cell casing 2, by at least 99 % of the vertical edge. Preferably the complete edge (i.e. substantially 100 %) of the edge is attached to the cell casing, since this will provide the optimal heat transfer, i.e. cooling from the casing to the inside of the electrode assemble.

According to one example the vertical edge 12 may be attached to the casing 2 by soldering the outer vertical edge 12 to the casing. A soldered portion (not shown in Fig. 1) may thus be formed between the casing 2 and the outer vertical edge 12.

The soldered portion may comprise a material which further increases or facilitates the heat transfer from the negative electrode 4 to the cell casing 2. Said material may further have a thermal conductivity, or bulk conductivity, in the range of 50 to 400 W/m·K. Conventional soldering materials, such as tin has a thermal conductivity around 50 W/m·K. The soldering portion or the soldering material used in the present disclosure is preferably formed by a material with a thermal conductivity in the higher range, and the technical benefit may include an increase in the heat transfer and cooling. Such materials may include copper, which the electrically conducting substrate may also be formed from. This means that in one alternative the vertical edge of the conductive substrate itself is soldered to the cell casing. In one alternative the soldering material is made of copper, i.e. the conductive substrate and the soldered portion comprise or consist of the same material.

The vertical edge 12 may also be attached to the casing by other means or attachment arrangements, which increase or promote the heat transfer from the negative electrode 4 to the cell casing 2.

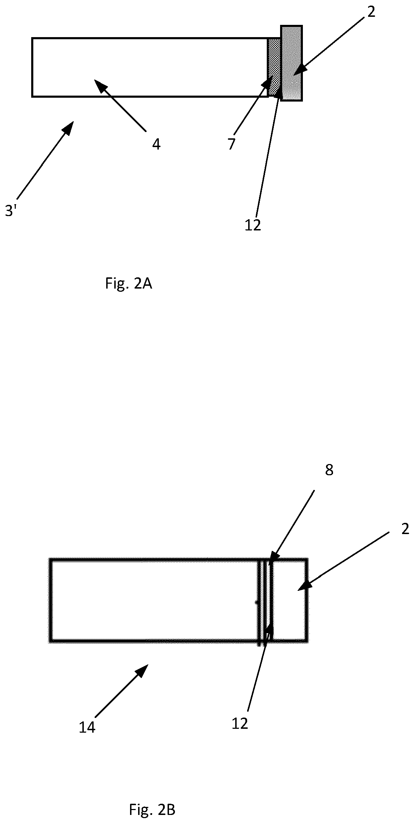

As illustrated in Fig. 2A a vertical edge 12 of the current collector 8 of the negative electrode 4 in a jelly-roll configuration 3' may be attached to the cell casing 2 of a cylindrical or prismatic battery cell. The current collector 8 (or the conductive substrate) may thus have an uncoated or extended portion which is attached to the cell casing.

As illustrated in Fig. 2B the vertical edge 12 of the current collector 8 in a stacked configuration in a flattened or stacked electrode assembly 14 of a prismatic battery cell may be attached to the cell casing 2.

In an alternative example the outer edge 12 of the current collector 8 may have a reinforced portion (not shown). The reinforced portion may extend along substantially the entire length of the vertical edge. By reinforced portion is means that the current collector may be thicker, as seen in a direction perpendicular to the vertical direction.

The present disclosure will now be described by way of examples.

Example 1: A battery cell 1 comprising a cell casing 2, and an electrode assembly 3 comprising a negative electrode 4 and a positive electrode 5, and at least two insulating layers 6, 6' in a sandwich configuration, wherein said negative electrode 4 comprises a current collector 7 and a negative electrode material 8 coating arranged thereon, and has an outer vertical edge 12 extending along a vertical axis A, and which is facing said cell casing 2, wherein said outer vertical edge 12 is attached to said cell casing 2 by at least 80 % of the length of the vertical edge.

Example 2: The battery cell 1 according to the example 1, wherein a vertical edge 12 of said current collector 7 is attached to said cell casing 2.

Example 3: The battery cell 1 according to example 1 or 2, wherein said vertical edge 12 of said current collector 7 has a reinforced portion arranged along the length of the vertical edge.

Example 4: The battery cell according to any one of examples 1 to 3, wherein said outer vertical edge 12 is attached to said cell casing 2 by at least 90 % of the length of the vertical edge.

Example 5: The battery cell according to any one of examples 1 to 3, wherein said outer vertical edge 12 is attached to said cell casing 2 by at least 95 % of the length of the vertical edge.

Example 6: The battery cell according to any one of examples 1 to 3, wherein said outer vertical edge 12 is attached to said cell casing 2 by at least 99 % of the length of the vertical edge.

Example 7: The battery cell of any of examples 1-6, further comprising a soldered portion arranged between said vertical edge 12 and said cell casing 2.

Example 8: The battery cell of example 7, wherein said soldered portion comprises a material having a thermal conductivity in the range of 50 to 400 W/m·K.

Example 9: The battery cell according to any one of examples 1 to 8, wherein said battery cell is any one of a cylindrical battery cell and a prismatic battery cell.

Example 10: A vehicle comprising the battery cell according to any of examples 1-9.

Example 11: A method for manufacturing a battery cell 1 according to any one of examples 1 to 9, comprising: providing a cell casing 2; providing an electrode assembly 3 comprising a negative electrode 4, a positive electrode 5, and at least two insulating layers 6, 6' in a sandwich configuration, and wherein said negative electrode 4 comprises a current collector 7 and a negative electrode material 8 coated thereon; placing said electrode assembly 3 into said cell casing 2; and attaching an outer vertical edge 7 of said negative electrode 4 to said cell casing 2, wherein said outer vertical edge 12 is attached to cell casing 2 by at least 80 % of the length of the vertical edge 12.

Example 12: The method for manufacturing said battery cell 1 according to example 11, wherein the method further comprises: arranging said electrode assembly to form a rolled-up sandwich configuration 3' before placing said rolled-up sandwich configuration 3' into said cell casing 2.

Example 13: The method for manufacturing said battery cell 1 according to claim 11, wherein the method further comprises: arranging said electrode assembly to form a stacked configuration 14, before placing said stacked configuration into said cell casing 2.

Example 14: The method for manufacturing a battery cell 1 according to any one of examples 11 to 13, wherein said vertical edge 12 is attached to said cell casing 2 by at least 90 % of the length of the vertical edge 12.

Example 15: The method for manufacturing a battery cell 1 according to any one of examples 11 to 14, wherein said vertical edge 12 is attached to said cell casing 2 by at least 95 % of the length of the vertical edge 12.

Example 16: The method for manufacturing a battery cell 1 according to any one of examples 11 to 15, wherein said vertical edge 12 is attached to said cell casing 2 by at least 99 % of the length of the vertical edge 12.

Example 17: The method for manufacturing a battery cell 1 according to any one of examples 11 to 15, wherein a vertical edge 12 of said current collector 8 is attached to said cell casing 2.

Example 18: The method for manufacturing a battery cell 1 according to any one of examples 11 to 17, wherein said vertical edge 12 of said current collector 7 has a reinforced portion arranged along the length of the vertical edge.

Example 19: The method for manufacturing a battery cell 1 according to any one of examples 11 to 18, wherein said vertical edge 12 is attached to said cell casing 2 by soldering such that a soldered portion is formed between said vertical edge 12 and said cell casing.

Example 20: The method for manufacturing a battery cell 1 according to example 19, wherein said soldered portion comprises a material having a thermal conductivity in the range of 50 to 400 W/m K.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A battery cell (1) comprising a cell casing (2), and an electrode assembly (3) comprising a negative electrode (4) and a positive electrode (5), and at least two insulating layers (6, 6') in a sandwich configuration, wherein said negative electrode (4) comprises a current collector (7) and a negative electrode material (8) coating arranged thereon, and has an outer vertical edge (12) extending along a vertical axis (A), and which is facing said cell casing (2), wherein said outer vertical edge (12) is attached to said cell casing (2) by at least 80 % of the length of the vertical edge.

2. The battery cell (1) according to claim 1, wherein a vertical edge (12) of said current collector (7) is attached to said cell casing (2).

3. The battery cell (1) according to claim 1 or 2, wherein said vertical edge (12) of said current collector (7) has a reinforced portion arranged along the length of the vertical edge.

4. The battery cell according to any one of claims 1 to 3, wherein said outer vertical edge (12) is attached to said cell casing (2) by at least 90 % of the length of the vertical edge, or by at least 95 % of the length of the vertical edge, or by at least 99 % of the length of the vertical edge.

5. The battery cell of any of claims 1-4, further comprising a soldered portion arranged between said vertical edge (12) and said cell casing (2).

6. The battery cell of claim 5, wherein said soldered portion comprises a material having a thermal conductivity in the range of 50 to 400 W/m K.

7. The battery cell according to any one of claims 1 to 6, wherein said battery cell is any one of a cylindrical battery cell and a prismatic battery cell.

8. A vehicle comprising the battery cell according to any of claims 1-7.

9. A method for manufacturing a battery cell (1) according to any one of claims 1 to 8, comprising:
providing a cell casing (2);
providing an electrode assembly (3) comprising a negative electrode (4), a positive electrode (5), and at least two insulating layers (6, 6') in a sandwich configuration, and wherein said negative electrode (4) comprises a current collector (7) and a negative electrode material (8) coated thereon;
placing said electrode assembly (3) into said cell casing (2);
and attaching an outer vertical edge (7) of said negative electrode (4) to said cell casing (2), wherein said outer vertical edge (12) is attached to cell casing (2) by at least 80 % of the length of the vertical edge (12).

10. The method for manufacturing said battery cell (1) according to claim 9, wherein the method further comprises:
arranging said electrode assembly to form a rolled-up sandwich configuration (3') before placing said rolled-up sandwich configuration (3') into said cell casing (2), or arranging said electrode assembly to form a stacked configuration (14), before placing said stacked configuration into said cell casing (2).

11. The method for manufacturing a battery cell (1) according to any one of claims 9 to 10, wherein said vertical edge (12) is attached to said cell casing (2) by at least 90 % of the length of the vertical edge (12), or by at least 95 % of the length of the vertical edge (12), or by at least 99 % of the length of the vertical edge (12).

12. The method for manufacturing a battery cell (1) according to any one of claims 9 to 11, wherein a vertical edge (12) of said current collector (8) is attached to said cell casing (2).

13. The method for manufacturing a battery cell (1) according to any one of claims 9 to 12, wherein said vertical edge (12) of said current collector (7) has a reinforced portion arranged along the length of the vertical edge.

14. The method for manufacturing a battery cell (1) according to any one of claims 9 to 13, wherein said vertical edge (12) is attached to said cell casing (2) by soldering such that a soldered portion is formed between said vertical edge (12) and said cell casing (2).

15. The method for manufacturing a battery cell (1) according to claim 14, wherein said soldered portion comprises a material having a thermal conductivity in the range of 50 to 400 W/m·K.
